# EUROPEAN PATENT APPLICATION

(11) **EP 4 628 859 A1**
(43) Date of publication of application: **08.10.2025**
(21) Application number: 24168289.7
(22) Date of filing: 03.04.2024
(51) Int. Cl.: G01J 5/00, G01J 5/02, G01J 5/05

(54) **METHOD FOR CONTACTLESS MEASUREMENT OF A TEMPERATURE DISTRIBUTION OF A FIRE EVENT WITH A PORTABLE THERMAL IMAGING CAMERA AND PORTABLE THERMAL IMAGING CAMERA**

(71) Applicant: LEADER Photonics GmbH, 9500 Villach (AT)
(72) Inventor: HOTZ, Andreas, 9504 Villach (AT)
(74) Representative: Wirnsberger & Lerchbaum Patentanwälte OG

(57) **Abstract**

Method for contactless measurement of a temperature distribution of a fire event with a portable thermal imaging camera (1), wherein infrared radiation emitted by the fire event is measured with a pixel-based infrared sensor unit which is arranged inside a housing (10) of the thermal imaging camera (1) and a thermal image (7) is displayed with a display unit (2) of the thermal imaging camera (1). To achieve a high operational practicability a display area (3) of the display unit displays a thermal image section (4), a color indicator section (5) and preferably an information section (6), wherein the thermal image (7) is displayed in the thermal image section (4), wherein in the thermal image (7) a measured temperature distribution in a temperature range greater than 200°C is displayed with varying colors, wherein in the color indicator section (5) a color-temperature assignment is displayed, wherein the thermal image section (4) and the color indicator section (5) are arranged next to each other and at a distance from each other.

## Description

The invention concerns a method for contactless measurement of a temperature distribution of a fire event with a portable thermal imaging camera, in particular during a firefighting operation, wherein infrared radiation emitted by the fire event is measured with a pixel-based infrared sensor unit of the thermal imaging camera which is arranged inside an, in particular dust-tight and waterproof, housing of the thermal imaging camera and a thermal image is displayed with a display unit of the thermal imaging camera.

Furthermore, the invention concerns a portable thermal imaging camera for contactless measurement of a temperature distribution of a fire event, in particular during a firefighting operation, wherein the thermal imaging camera has a housing, which in particular is designed to be dustproof and waterproof, wherein a pixel-based infrared sensor unit of the thermal imaging camera is arranged inside the housing to measure infrared radiation emitted by the fire event and to display a thermal image with a display unit of the thermal imaging camera.

Portable thermal imaging cameras are known to be used for contactless measurement of a temperature distribution of a fire event, for example in a building, as part of a firefighting operation. Such thermal imaging cameras are usually designed for a harsh operating environment, in particular for use in the context of such a firefighting operation, and have corresponding specifications with regard to robustness, dust-tightness and water-tightness and display picture representation. Usually, such a thermal imaging camera has a robust housing, in which an infrared sensor unit and control electronics are arranged, as well as a germanium protective screen enclosed in the housing, so that infrared radiation can reach the infrared sensor unit via the germanium protective screen, and a display unit, with which a thermal image corresponding to the measured infrared radiation is displayed. The infrared sensor unit is usually configured to measure infrared radiation from the fire event in a temperature range greater than 200°C.

In the thermal image, a temperature distribution can be displayed in different colors, wherein other information useful for the firefighter, such as a color bar, which represents a color-temperature assignment, and status information and setting information of the thermal imaging camera are usually displayed superimposed on the thermal image. This makes it possible to display the thermal image, especially as it usually has a relatively low level of detail visibility, as large as possible in a display area of the display unit and still also display the other information with the display area.

It is an object of the invention to provide a method for contactless measurement of a temperature distribution of a fire event with a portable thermal imaging camera, in particular during a firefighting operation, which method has a high operational practicability when measuring the temperature distribution.

A further object of the invention is to provide a portable thermal imaging camera for contactless measurement of the temperature distribution of a fire, which thermal imaging camera has a high operational practicability when measuring the temperature distribution.

The basis of the invention is the observation that in a special operational situation of a conventional thermal imaging camera in the context of a firefighting operation, for example when a firefighter who is confronted with a fire event measures a temperature distribution of the fire event with the thermal imaging camera in order to analyze the fire event, a classically provided superimposition of the thermal image with the color bar can prove to be problematic. Rapid action by the firefighter, which is often required in an emergency situation, combined with rapidly changing temperature distributions of the fire event can lead to rapidly changing color representations in the thermal image, whereby it is often difficult for the firefighter to distinguish a color representation of the thermal image from the color bar, especially at high temperatures, in particular if a thermal image area which is adjacent to a color bar section and the color bar section have essentially the same color. This can increase the susceptibility to errors and/or the time required for the firefighter to interpret the thermal image and thus increase a hazard potential.

To achieve the foregoing object, the invention provides a method for contactless measurement of a temperature distribution of a fire event with a portable thermal imaging camera, in particular during a firefighting operation, wherein infrared radiation emitted by the fire event is measured with a pixel-based infrared sensor unit of the thermal imaging camera which is arranged inside an, in particular dust-tight and waterproof, housing of the thermal imaging camera and a thermal image is displayed with a display unit of the thermal imaging camera, wherein a display area of the display unit displays a thermal image section, a color indicator section, and preferably an information section, wherein the thermal image is displayed in the thermal image section, wherein in the thermal image a measured temperature distribution in a temperature range greater than 200°C, in particular greater than 600°C, is displayed with varying colors, in particular different color levels, wherein in the color indicator section a color-temperature assignment, in particular with a color bar, is displayed, wherein the thermal image section and the color indicator section are arranged next to each other and at a distance from each other.

By arranging a thermal image section and a color indicator section next to each other and at a distance from each other in the display area, the display unit can be read quickly and/or with few errors. Even though in this way not the entire display area is generally used to display the thermal image, it has been shown that in a special operational situation of an investigation of a fire event, in particular in the context of a firefighting operation, a high reading reliability of the user outweighs an intentionally accepted smaller thermal image representation as an advantage. In particular, this can avoid the aforementioned problem when reading the display unit by a user of the thermal imaging camera, for example a firefighter during a firefighting operation. The thermal image is usually a real-time depiction, in particular a real-time moving image depiction or a real-time video depiction. The thermal image section, particularly the thermal image, and the color indicator section, particularly the color-temperature assignment, are usually arranged next to each other in an arrangement direction. The thermal image section can be formed by the thermal image. In the thermal image, a measured temperature distribution in a temperature range greater than 200°C, in particular greater than 600°C, preferably between 200°C and 1150°C, can be displayed with varying colors, in particular different color levels. The temperature distribution is usually part of the thermal image. Equal temperatures, especially temperature ranges, are usually displayed with the same colors. A respective color usually corresponds to a certain, preferably adjustable, temperature range. Different colors usually correspond to different temperature ranges. The thermal image can be a grayscale representation, wherein the measured temperature distribution in the aforementioned temperature range is superimposed on the grayscale representation in the thermal image. Usually, a temperature distribution of less than 200°C is shown as a grayscale representation in the thermal image. The fire event can be a fire and/or a burning object.

The color-temperature assignment usually represents an arrangement of different color areas that correspond to colors of the thermal image, so that temperature information is assigned to the color areas. The color areas usually correspond to the colors assigned to specific temperature ranges in the thermal image. The color areas of the color-temperature assignment can be arranged according to an ordering scheme depending on the respective temperature ranges assigned to the color areas. For example, the color areas can be sorted according to increasing temperature in relation to their temperature ranges. The color-temperature assignment is usually implemented with a color bar, comprising several of the different color areas, especially the different color areas. In general, the different color areas correspond to different temperature ranges. The color areas in the color bar are usually arranged along a longitudinal direction of the color bar according to the ordering scheme, in particular sorted by ascending temperature in relation to the temperature ranges assigned to the color areas. The color bar can be designated as a color-temperature reference bar.

An average, in particular lateral, distance between the thermal image and the color bar can be at least 1.5 times, in particular at least 2 times, preferably at least 3 times, of an average width of the color bar. The distance usually refers to a thermal image edge of the thermal image and a color bar edge of the color bar, which face each other. The color areas can be arranged adjoining each other or flowing into each other. The color indicator section can be formed by the color-temperature assignment, in particular by the color bar. The distance, especially average distance, between the thermal image and the color bar is usually measured in the arrangement direction. The width, in particular the average width, of the color bar is usually measured orthogonally to the longitudinal direction of the color bar.

The display area of the display unit can display an information section, in particular the aforementioned information section. In the information section, setting information and/or setting options of the thermal imaging camera can be displayed. Usually, the information section and the thermal imaging section are arranged next to each other and at a distance from each other, particularly in the arrangement direction. An average, in particular lateral, distance between the thermal image and the information section can be at least 1.5 times, in particular at least 2 times, preferably at least 3 times, of an average width of the color bar. The distance, especially average distance, between the thermal image and the information section is usually measured in the arrangement direction. A high reading practicability can be achieved if the information section and the color indicator section are arranged on opposite sides of the thermal imaging section. This applies particularly in the arrangement direction.

The display area can be essentially rectangular in shape. A longitudinal direction of the display area can be parallel to a length side of the display area, in particular its rectangular shape. A width direction of the display area can be parallel to a width side of the display area, in particular its rectangular shape. The length side is usually larger than the width side. The length direction and width direction of the display area are usually oriented orthogonally to each other. The thermal image can be essentially rectangular in shape. A longitudinal direction of the thermal image can be parallel to a length side of the thermal image, in particular its rectangular shape. A width direction of the thermal image can be parallel to a width side of the thermal image, in particular its rectangular shape. The length side is usually larger than the width side. The longitudinal direction and width direction of the thermal image are usually oriented orthogonally to each other. It is favorable if the longitudinal direction of the display area, in particular the length side of its rectangular shape, is parallel to the arrangement direction. It is favorable if the longitudinal direction of the thermal image, in particular the length side of its rectangular shape, is parallel to the arrangement direction.

The thermal image is usually arranged in the center of the display area. The thermal image can cover at least 50 %, in particular at least 60 %, preferably at least 70 %, of the display area. The thermal image can extend in at least one extent direction over at least 90 %, in particular over at least 95 %, preferably essentially completely over, an extent of the display area in the extent direction. The extent direction can be the width direction of the display area, especially its rectangular shape. The extent direction can be orthogonal to the arrangement direction.

It is particularly favorable for efficient reading, especially in the context of a firefighting operation, if the longitudinal direction of the display area and the longitudinal direction of the thermal image are essentially parallel to each other. This applies in particular if the display area and the thermal image are essentially rectangular, whereby the respective longitudinal direction usually refers to one length side of the respective rectangular shape.

In this way, a representation of the display area corresponds to a high degree with a field of vision representation of human eyes. The above can apply analogously to the respective width direction.

The thermal imaging camera can have a lateral angle of view of at least 50°, preferably at least 60°. The lateral angle of view can also be referred to as the horizontal field of view of the thermal imaging camera. The lateral angle of view usually represents a horizontal angle of view of the thermal imaging camera. The lateral angle of view is usually measured in a plane parallel to the longitudinal direction of the thermal image and parallel to the viewing direction of the thermal image. In particular, combined with the above-described correspondingly aligned longitudinal directions of the display area and thermal image, a display representation can be achieved in this way, which further time-efficient reading with reduced physiological effort on the part of the user. For a low-effort measurement, it is favorable if the thermal imaging camera has an elevation angle of view of at least 40°, preferably at least 45°. The elevation angle of view can also be referred to as the vertical field of view angle of the thermal imaging camera. The elevation angle of view usually represents a vertical angle of view of the thermal imaging camera. The elevation angle is usually measured in a plane parallel to the width direction of the thermal image and parallel to the viewing direction of the thermal image.

The information section and the color indicator section can be arranged in different end regions of the display area in the arrangement direction. From the perspective of a user using the thermal imaging camera as intended, the arrangement direction can run from left to right. In the arrangement direction, the color indicator section can be arranged behind the thermal imaging section. The information section can be arranged before the thermal imaging section in the arrangement direction.

The thermal image can have a specific area, which specific area is usually marked with a marking in the thermal image. The specific area is usually a sub-area of the thermal image, which is typically positioned in a center area of the thermal image. The display area of the display unit can display a temperature value section in which a temperature value corresponding to the specific area of the thermal image is shown. The temperature value section and the thermal image section can be arranged next to each other and at a distance from each other, in particular in the arrangement direction. Preferably, the temperature value section is arranged below or above the color indicator section at a distance from the color indicator section, in particular in a direction orthogonal to the arrangement direction. The temperature value section can be formed by the displayed temperature value. The display area of the display unit can display a temperature bar section, wherein a temperature bar is shown in the temperature bar section, wherein a length of the temperature bar is displayed corresponding to a temperature of the specific area of the thermal image. The temperature bar section and the thermal image section can be arranged next to each other and at a distance from each other, in particular in the arrangement direction. The temperature bar section can be formed by the temperature bar. The temperature bar section can be arranged between the thermal image and the color indicator section. The temperature bar and the color bar can be arranged next to each other with their longitudinal directions running parallel to each other, wherein temperatures designated with end positions of the temperature bar correlate to temperature ranges of the color areas of the color bar, which respective color areas are located in the longitudinal direction of the color bar at the level of the respective end position of the temperature bar. Temperature labels can be displayed along the color bar and/or along the temperature bar. The temperature labels can indicate the temperature ranges of the color areas or a temperature corresponding to an extent of the temperature bar.

Preferably, the thermal image is displayed such that more than 90 %, particularly more than 95 %, preferably more than 99 %, of an image area of the thermal image is not superimposed by other visualization elements and/or is displayed visibly.

Typically, the thermal imaging camera has a battery for the power supply. The battery can be located inside the housing of the thermal imaging camera. The battery is usually rechargeable. The display area of the display unit can display a battery indicator section, in which a battery charge status of the battery of the thermal imaging camera is shown. The battery charge status can be displayed with a battery charge bar, whereby a length of the battery charge bar usually indicates a charge status of the battery. The battery charge bar can be displayed relative to a maximum extent of the battery charge bar shown in the battery indicator section to indicate the state of charge. Usually, the battery indicator section is displayed superimposed on the thermal image, typically in the middle of the thermal image in relation to one of the length sides of the thermal image. The battery indicator section can be displayed in a vicinity of the length side of the thermal image. Such a representation of the battery indicator section is intended to meet a high safety requirement in the context of an investigation of a fire event and/or firefighting operation, especially since a low battery charge level can represent a safety risk. The battery indicator section can be part of the thermal image section.

The respective section, in particular the thermal image section and/or the color indicator section and/or the information section, can have a background area, wherein visualization elements of the respective section are arranged on the background area, in particular superimposed on the background area. The arrangement of the respective visualization element on the background area usually refers to an illustrated representation of the respective section. An average brightness of the respective background area can be at least 50 %, in particular at least 75 %, preferably at least 90 %, lower than an average brightness of the visualization elements of the respective section in relation to the average brightness of the visualization elements. Preferably, the respective visualization element is essentially completely framed by the respective background area. This can apply to the vast majority of the visualization elements of the respective section. In this way, quick readability by the user is promoted. The respective background area can be essentially single-colored, gray-colored or black-colored, wherein black-colored is preferred. The respective background area can extend essentially over the entire respective section, wherein other visualization elements of the respective section can be shown superimposed on the respective background area. Visualization elements can be, for example, the color-temperature assignment, in particular the color bar, the thermal image, the setting information, the setting options, the temperature value, and/or the temperature bar.

In particular, the color-temperature assignment can be arranged on the background area of the color indicator section, in particular superimposed on the background area. An average brightness of the background area can be smaller than the average brightness of the color-temperature assignment, in particular its color areas, by at least 50 %, in particular at least 75 %, preferably at least 90 %, with respect to an average brightness of the color-temperature assignment. A side of the color-temperature assignment facing the thermal image can be essentially completely bordered by the background area, in particular one or more portions of the background area. Preferably, the color temperature assignment is essentially completely framed by the background area. In this way, quick readability by the user is promoted. The background area can be implemented as described above.

The infrared sensor unit can be implemented with a microbolometer array, in particular at least a two-dimensional microbolometer array. For a high operational capability for investigating a fire, in particular during a firefighting operation, it is favorable if the infrared sensor unit, in particular the microbolometer array, is capable of detecting infrared radiation in a spectral range of 7 µm to 14 µm, wherein preferably the infrared sensor unit has its maximum sensitivity in this spectral range. Usually there is a high transparency of smoke gases in this spectral range.

Furthermore, the invention concerns a portable thermal imaging camera for contactless measurement of a temperature distribution of a fire event, in particular during a firefighting operation, wherein the thermal imaging camera has a housing, which in particular is designed to be dustproof and waterproof, wherein a pixel-based infrared sensor unit of the thermal imaging camera is arranged inside the housing to measure infrared radiation emitted by the fire event and to display a thermal image with a display unit of the thermal imaging camera, wherein the thermal imaging camera is configured to display with a display area of the display unit a thermal image section, a color indicator section and preferably an information section, in order to display the thermal image in the thermal image section, wherein in the thermal image a measured temperature distribution in a temperature range greater than 200°C, in particular greater than 600°C, is displayed with varying colors, in particular different color levels, and in the color indicator section a color-temperature assignment, in particular with a color bar, is displayed, wherein the thermal image section and the color indicator section are arranged next to each other and at a distance from each other. Typically, to implement the temperature distribution, different image areas of the thermal image can be displayed with colors corresponding to the temperature, depending on their respective assigned temperature. The camera can be configured to conduct the method for contactless measurement of a temperature distribution of a fire event as described in this document.

The portable thermal imaging camera can be designed analogous to the features and effects described in the context of the method for contactless measurement of a temperature distribution of a fire event, in particular as described above in this document. The same applies to the method with regard to the portable thermal imaging camera.

The thermal imaging camera can have a heat resistance of at least 15 minutes at an ambient temperature of 150°C and/or at least 5 minutes at an ambient temperature of 260°C. The thermal imaging camera, in particular the infrared sensor unit, can be designed to detect infrared radiation from a fire event in a temperature range greater than 200°C, in particular greater than 600°C, preferably between 200°C and 1150°C, in order to generate the thermal image. The thermal imaging camera can be designed to be dustproof and waterproof against at least temporary immersion, in particular against submersion in water at a water depth of 1 meter for 30 minutes. Preferably, this applies to an IP protection class (international protection class) of at least IP67. The IP protection class is usually implemented in accordance with DIN EN 60529. This applies in particular to the housing of the thermal imaging camera.

Inside the housing of the thermal imaging camera, an electronic control unit of the thermal imaging camera is usually arranged for controlling, in particular regulating, the thermal imaging camera, in particular the infrared sensor unit and/or the display unit. The electronic control unit can be configured to process data generated by the infrared sensor unit and/or transmit the data to the display unit for displaying the data in the form of the thermal image. A display, especially a layout, of information, in particular the respective section described in this document, with the display area of the display unit is usually computer-implemented, for example with the electronic control unit of the thermal imaging camera or with an electronic control device of the display. The electronic control unit and/or the control device can have a microprocessor for this purpose.

The housing of the thermal imaging camera can comprise a germanium disk enclosed by a housing body so that infrared radiation can pass through the germanium disk to the infrared sensor unit in order to detect the infrared radiation with the infrared sensor unit. In this way, a high level of robustness and protection of the interior of the housing, in particular the infrared sensor unit, can be achieved. The germanium disk and the display unit are usually arranged on opposite sides of the thermal imaging camera. The thermal imaging camera can comprise infrared optics in order to guide infrared radiation to the infrared sensor unit with the infrared optics, in particular by focusing the infrared radiation.

The infrared optics can be formed with one or more lenses and/or one or more mirrors. The infrared optics are usually arranged in front of the infrared sensor unit in a direction contrary to the viewing direction of the thermal imaging camera. In particular, the infrared optics are arranged between the germanium disk and the infrared sensor unit.

The elements, especially sections, described in this document, which are arranged next to each other in a direction, in particular in the arrangement direction, are usually arranged in such a way that the respective adjacent elements at least partially overlap each other in the direction, in particular the arrangement direction. Next to each other can, for example, be laterally next to each other or on top of each other. Usually, the thermal imaging camera is used to carry out thermography in order to generate the thermal image. The thermal image may be referred to as a thermogram. The sections described in this document that can be displayed with the display unit are usually displayed with a common display area of the display unit.

The invention will now be described by way of example with reference to the accompanying drawing, in which:

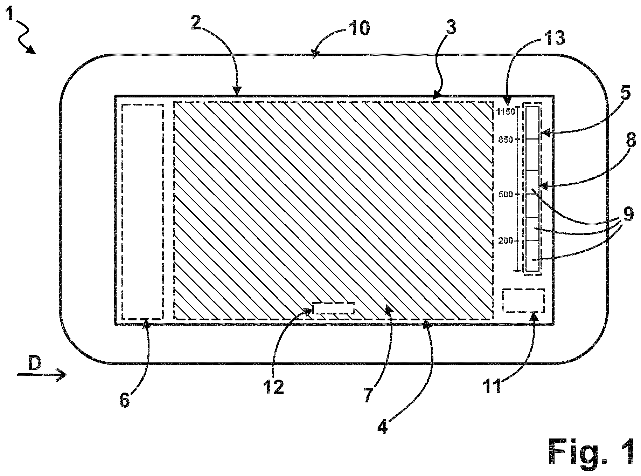

Fig. 1 shows a schematic illustration of a portable thermal imaging camera 1 used in a method for contactless measurement of a temperature distribution of a fire event with the thermal imaging camera 1 in a view on a display area 3 of a display unit 2 of the thermal imaging camera 1. The thermal imaging camera 1 has a pixel-based infrared sensor unit, usually implemented as a microbolometer array, inside a housing 10 of the thermal imaging camera 1. The housing 10 is dustproof and waterproof. The infrared radiation emitted by the fire event is measured with the infrared sensor unit and a thermal image 7 is shown on the display unit 2 of the thermal imaging camera 1. A display area 3 of the display unit 2 depicts a thermal image section 4, a color indicator section 5 and preferably an information section 6. The thermal image 7 is displayed in the thermal image section 4. In the color indicator section 5, a color-temperature assignment is displayed in the form of a color bar 8, wherein colors displayed in the thermal image 7 correspond to color areas 9 of the color bar 8. In the information section 6, setting information and/or setting options of the thermal imaging camera 1 can be displayed, such as a display mode and/or user-selectable symbols relating to setting options of the thermal imaging camera 1.

The thermal image section 4, in particular the thermal image 7, and the color indicator section 5, in particular the color bar 8, are arranged next to each other and at a distance from each other along an arrangement direction D. Preferably, the thermal image section 4, in particular the thermal image 7, is arranged between the information section 6 and the color indicator section 5, in particular the color bar 8, in the arrangement direction D. A direction of a length side of a rectangular shape of the thermal image 7 is usually oriented parallel to the arrangement direction D. A longitudinal direction of the color bar 8 is usually oriented orthogonally to the arrangement direction D.

The color bar 8 can have different color areas 9 consecutively arranged along a longitudinal direction of the color bar 8, wherein a respective color area 9 corresponds to a certain temperature range. The color areas 9 of the color bar 8 are usually arranged one after the other along the longitudinal direction of the color bar 8, sorted according to increasing temperature in relation to the temperature ranges assigned to the color areas 9. Temperature labels can be displayed assigned to the color areas 9 of the color bar 8, which indicates the temperature ranges of the color areas 9. The temperature labels 13 can be displayed in the color indicator section 5 or between the color indicator section 5, in particular between the color bar 8, and the thermal image 7. The display area 3 of the display unit 2 can display a temperature value section 11, wherein a temperature value corresponding to a specific area of the thermal image 7 is shown in the temperature value section 11. The temperature value section 11 can be arranged at a distance from the thermal image section 4 in the arrangement direction D, for example below the color indicator section 5 at a distance from the color indicator section 5.

Usually, the display area of the display unit 2 shows a battery indicator section 12, in which a battery charge level of the battery of the thermal imaging camera 1 is displayed. Preferably, the battery indicator section 12 is displayed superimposed on the thermal image 7, usually in relation to the length side of a rectangular shape of the thermal image 7 in the middle of the thermal image 7. The battery indicator section 12 can, for example, be displayed in a proximal area of a lower edge of the thermal image 7.

In this way, in an operational situation of a measurement of a temperature distribution of a fire event, in particular in the context of a firefighting operation, an operational practicability can be increased and, in particular, a susceptibility to errors and/or a time duration when interpreting the thermal image 7 by a user, in particular a firefighter, who operates the thermal imaging camera 1, can be reduced and thus a reduction of a hazard potential can be achieved.

## Claims

1. Method for contactless measurement of a temperature distribution of a fire event with a portable thermal imaging camera (1), in particular during a firefighting operation, wherein infrared radiation emitted by the fire event is measured with a pixel-based infrared sensor unit of the thermal imaging camera (1) which is arranged inside an, in particular dust-tight and waterproof, housing (10) of the thermal imaging camera (1) and a thermal image (7) is displayed with a display unit (2) of the thermal imaging camera (1), **characterized in that** a display area (3) of the display unit displays a thermal image section (4), a color indicator section (5) and preferably an information section (6), wherein the thermal image (7) is displayed in the thermal image section (4), wherein in the thermal image (7) a measured temperature distribution in a temperature range greater than 200°C, in particular greater than 600°C, is displayed with varying colors, in particular different color levels, wherein in the color indicator section (5) a color-temperature assignment, in particular with a color bar (8), is displayed, wherein the thermal image section (4) and the color indicator section (5) are arranged next to each other and at a distance from each other.

2. Method according to claim 1, wherein the color-temperature assignment is implemented with a color bar (8) comprising several different color areas (9), wherein different color areas (9) correspond to different temperature ranges, wherein an average, in particular lateral, distance between the thermal image (7) and the color bar (8) is at least 1.5 times, preferably at least 3 times, of an average width of the color bar (8).

3. Method according to claim 1 or 2, wherein the information section (6) displays setting information and/or setting options of the thermal imaging camera (1), wherein the information section (6) and the thermal imaging section are arranged next to each other and at a distance from each other.

4. Method according to any one of the claims 1 to 3, wherein the information section (6) and the color indicator section (5) are arranged on opposite sides of the thermal imaging section.

5. Method according to any one of the claims 1 to 4, wherein the thermal image (7) is arranged in a center of the display area (3).

6. Method according to any one of the claims 1 to 5, wherein the display area (3) displays a temperature value section (11) in which a temperature value corresponding to a specific area of the thermal image (7) is displayed, wherein the temperature value section (11) and the thermal image section (4) are arranged next to each other and at a distance from each other, wherein preferably the temperature value section (11) is arranged below or above the color indicator section (5) at a distance from the color indicator section (5).

7. Method according to any one of the claims 1 to 6, wherein the infrared sensor unit is implemented with a microbolometer array, which in particular is capable of detecting infrared radiation in a spectral range of 7 µm to 14 µm.

8. Method according to any one of the claims 1 to 7, wherein the thermal imaging camera (1) has a lateral angle of view of at least 50° and an elevation angle of view of at least 40°.

9. Portable thermal imaging camera (1) for contactless measurement of a temperature distribution of a fire event, in particular during a firefighting operation, in particular according to a method according to any one of the claims 1 to 8, wherein the thermal imaging camera (1) has a housing (10), which in particular is designed to be dustproof and waterproof, wherein a pixel-based infrared sensor unit of the thermal imaging camera (1) is arranged inside the housing (10) to measure infrared radiation emitted by the fire event and to display a thermal image (7) with a display unit (2) of the thermal imaging camera (1), **characterized in that** the thermal imaging camera (1) is configured to display with a display area (3) of the display unit (2) a thermal image section (4), a color indicator section (5) and preferably an information section (6), in order to display the thermal image (7) in the thermal image section (4), wherein in the thermal image (7) a measured temperature distribution in a temperature range greater than 200°C, in particular greater than 600°C, is displayed with varying colors, in particular different color levels, and in the color indicator section (5) a color-temperature assignment, in particular with a color bar (8), is displayed, wherein the thermal image section (4) and the color indicator section (5) are arranged next to each other and at a distance from each other.

10. Portable thermal imaging camera (1) according to claim 9, wherein the thermal imaging camera (1) has a heat resistance of at least 15 minutes at an ambient temperature of 150°C and is designed to detect infrared radiation of a fire event in a temperature range between 200°C and 1150°C in order to generate the thermal image (7).
